# EUROPEAN PATENT SPECIFICATION

(11) **EP 1 816 497 B1**
(45) Date of publication and mention of the grant of the patent: **12.01.2011**
(21) Application number: 05806678.8
(22) Date of filing: 17.11.2005
(51) Int. Cl.: G02B 6/38

(54) **OPTICAL CONNECTOR AND METHOD FOR MANUFACTURING THE SAME**
OPTISCHER VERBINDER UND VERFAHREN ZU SEINER HERSTELLUNG
CONNECTEUR OPTIQUE ET SON PROCEDE FABRICATION

(30) Priority: 18.11.2004 JP 2004335071
(43) Date of publication of application: 08.08.2007
(73) Proprietor: Hakusan Mfg. Co. Ltd., Toshima-ku Tokyo 1710022 (JP); National Institute of Advanced Industrial Science and Technology, Tokyo 100-8921 (JP)
(72) Inventor: SUGITA, Etsuji, Hussa-shi, Tokyo 1970003 (JP); WAKUTA, Shouichi, 2730862 (JP); AOYAGI, Masahiro, Ushiku-shi, Ibaraki 3001203 (JP)
(74) Representative: Green, Mark Charles
(86) International application number: PCT/JP2005/021138
(87) International publication number: WO 2006/054653

(56) References cited:
- JP-A- 01 072 105
- JP-A- 09 061 668
- JP-A- 11 160 575
- JP-A- 11 305 151
- JP-U- 06 047 910
- US-A1- 2002 146 215
- US-A1- 2002 196 998
- US-B1- 6 526 204

## Description

### [TECHNICAL FIELD]

This invention belongs to the technical field of an optical connector for butt-connecting connection ends of optical fibers at the time of constructing ferrules in which the connection ends are inserted.

### [BACKGROUND ART]

Connection of the optical fibers are made so as to retain continuity of a light path for reducing connection loss of light quantity by aligning the optical axes of the optical fibers having the connection ends inserted in the ferrules as well as polishing the end faces of the optical fibers to be butt-connected for preventing diffusion of light.

However, the extra length of the contact terminal of the optical fiber is prone to be made longer in laying the optical fiber, so it has been difficult to polish the end face of the optical fiber by using a polishing machine at the scene of laying the optical fiber. Thus, there bas been a great need for a connecting technology capable of eliminating polishing of the end faces of the optical fibers to be butt-connected.

There have been known the following technologies aiming at connecting the optical fibers without requiring polishing treatment.
[Patent Literature 1] Japanese Patent No. 3364638
Patent Literature 1 discloses an optical connector having FOP (Fiber Optical Plate) attached to a joint surface of the ferrule in which the connection end is inserted.

In the optical connector described in Patent Literature 1, the connection ends of the optical fibers are inserted in the ferrule without polishing the end faces of the optical fibers, and FOP is interposed between the unpolished end faces of the optical fibers butt-connected in the ferrule, thereby to prevent diffusion of light. Further connectors with fibre arrays comprising fibre stubs in a front precision part and the fibres to be connected in a rear part are described in US2002/0146215, JP113051, and 2002/0196998. The firing of front and rear part thereby comprises adhesive or pins. Also known in the art of fibre array connectors are so called anti-wicking grooves provided in the front focus of the array connectors for preventing adhesive flow to the coupling ends of the optical fibres.

### [DISCLOSURE OF INVENTION]

### [PROBLEMS TO BE RESOLVED BY THE INVENTION]

The optical connector of Patent Literature 1 uses an optical fiber with an FOP, which has a smaller core diameter than that of another optical fiber to be connected to the optical fiber retained by the optical connector, but the optical connector disadvantageously has a part impenetrable to light to divide an optical path, so that connection loss of light propagation cannot be reduced sufficiently

The present invention was made in the light of the aforementioned problems in the conventional optical connectors and seeks to provide an optical connector capable of sufficiently reducing connection loss of light propagated through the optical fibers without need for polishing end faces of the optical fibers, and an appropriate production method for the optical connector.

To solve the problems mentioned above, there is provided an optical connector set forth in claim 1.

With this structure for allowing the FOP of the optical connector described in Patent Literature 1 to be replaced with the intermediate optical fibers in the optical connector described above, there can be eliminated the matter of dividing of an optical path, which is caused by a part impenetrable to light of the optical fiber described in Patent Literature. Further with this structure, a space between the end faces of the intermediate optical fibers and the end faces of the optical fibers inserted in the ferrule is in communication with the outside of the ferrule.

As described, the optical connector of claim 1 is featured by forming concaves and convexes in the peripheries of the pin holes of the front and rear blocks, which are mutually fitted with each other.

With this structure, the adhesive can be blocked by the concaves or convexes, consequently to be prevented from flowing into the pin holes.

Preferably the optical connector of the invention is featured in that the number of holding portions of the front block is equal to or larger than that of the insertion portions, as set forth in claim 3.

With this structure, since the holding portions of the front block are equal or larger in number than the insertion portions, the same front block can be mutually applied to the other rear blocks having a different number of insertion portions, thereby to advantageously save the effort of managing component parts.

Further to solve the problems mentioned above, there is provided a method for manufacturing an optical connector according to claim 4.

According to the manufacturing method thus provided, the front blocks required to be precisely processed by polishing can be respectively formed and then adhesively fixed to the rear blocks, which are not practically required to be precisely processed.

The manufacturing method described above of the invention can prevent adhesive used therefor from being an obstacle to the optical path even when the adhesive has no refractive index matching property.

According to the invention, the method for manufacturing the optical connector is featured in that the front and rear blocks of the ferrule are adhesively fixed to each other and secured by inserting guide pins into pin holes formed coaxially for positioning.

The manufacturing method described above of the invention can, which makes use of the adhesive having the refractive index matching with respect to the optical fibers, can precisely determine the positions of the front and rear blocks by means of the pin holes and the guide pins.

The method for manufacturing the optical connector claimed in claim 9 is featured by forming concaves and convexes in the peripheries of the pin holes of the front and rear blocks, which are mutually fitted with each other.

With the structure thus claimed, since the guide pins can be removed after adhesively fixing the front and rear blocks of the ferrule by using the guide pins as a guide for positioning the blocks, the adhesive can be prevented from sticking unnecessarily to the guide pins by means of the mutually engageable concaves and convexes formed in the peripheries of the pin holes.

Preferably, the method for manufacturing the optical connector is featured in that a refractive index matching gel having refractive index matching is applied to other surfaces of the optical fibers than the adhesion surfaces.

The manufacturing method described above of the invention can form a suitable optical path even if the adhesive comes off due to thermal strain or other causes, thereby to improve reliability of the optical connector.

### [ADVANTAGEOUS EFFECT OF THE INVENTION]

According to the optical connector of the invention, the matter of dividing of an optical path, which is caused by a part impenetrable to light of the optical fiber described in Patent Literature, can be eliminated by replacing the FOP of the optical connector described in Patent Literature 1 with the intermediate optical fibers in the optical connector, thereby sufficiently reducing connection loss of light propagated through the optical fibers without need for polishing end faces of the optical fibers.

Further, according to the manufacturing method of the invention, the front blocks required to be precisely processed by polishing can be respectively formed and then adhesively fixed to the rear blocks, which are not practically required to be precisely processed, thereby to facilitate manufacturing of the optical connector of the invention.

### [BRIEF DESCRIPTION OF THE DRAWINGS]

[FIG 1] Perspective view showing a first embodiment of the best mode for implementing the optical connector and method for manufacturing the same according to the present invention.
[FIG 2] Exploded view of FIG 1.
[FIG 3] Longitudinal sectional view of FIG 1.
[FIG 4] Perspective view of an example of processing the optical connector of FIG 1.

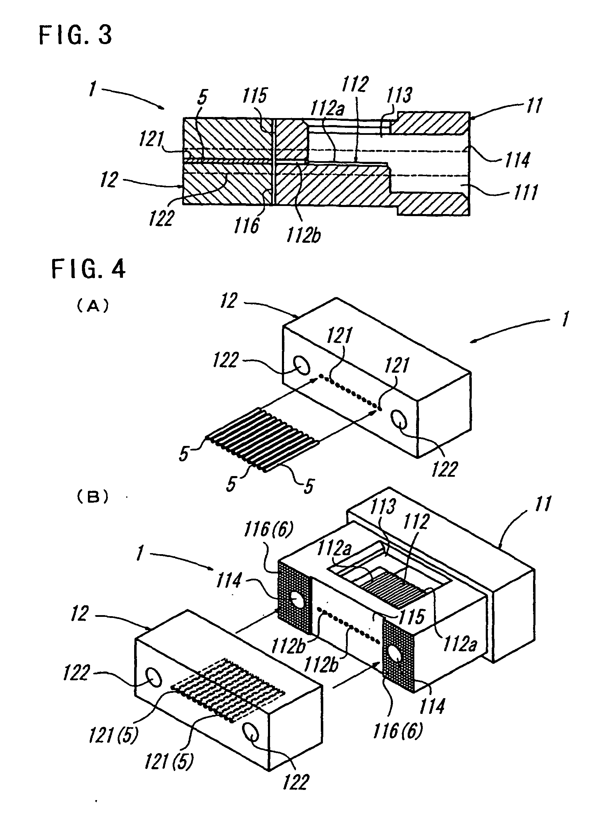

[FIG 4] Perspective view showing an example of processing the optical connector by a method different from that of FIG 4, in which the connector is processed and assembled in the order of (A) and (B).

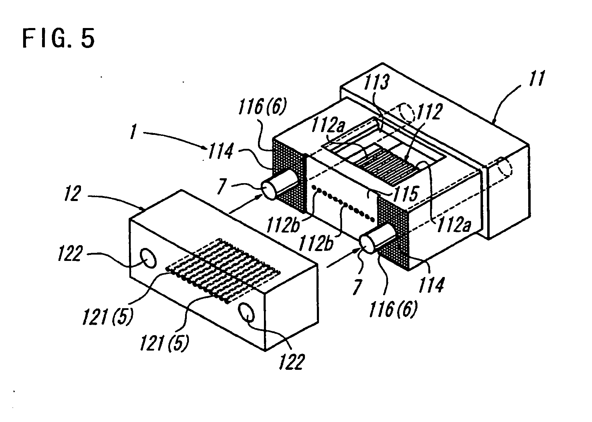

[FIG 5] Perspective view showing another example of processing by a method different from that of FIG 4.

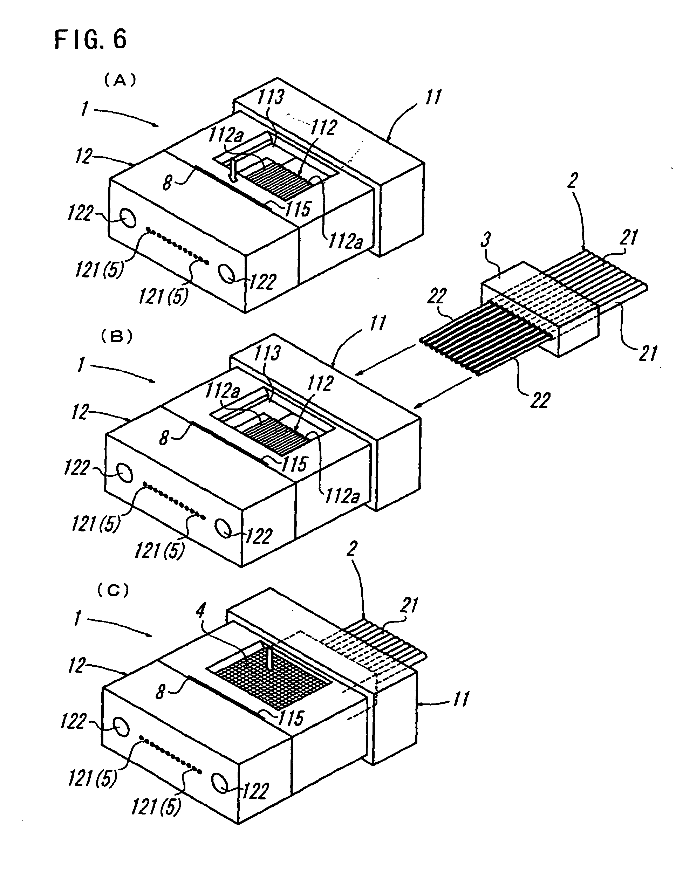

[FIG 6] Perspective view showing an example of processing the optical connector by a method different from that of FIG 4, in which the connector is assembled in the order of (A) to (C).

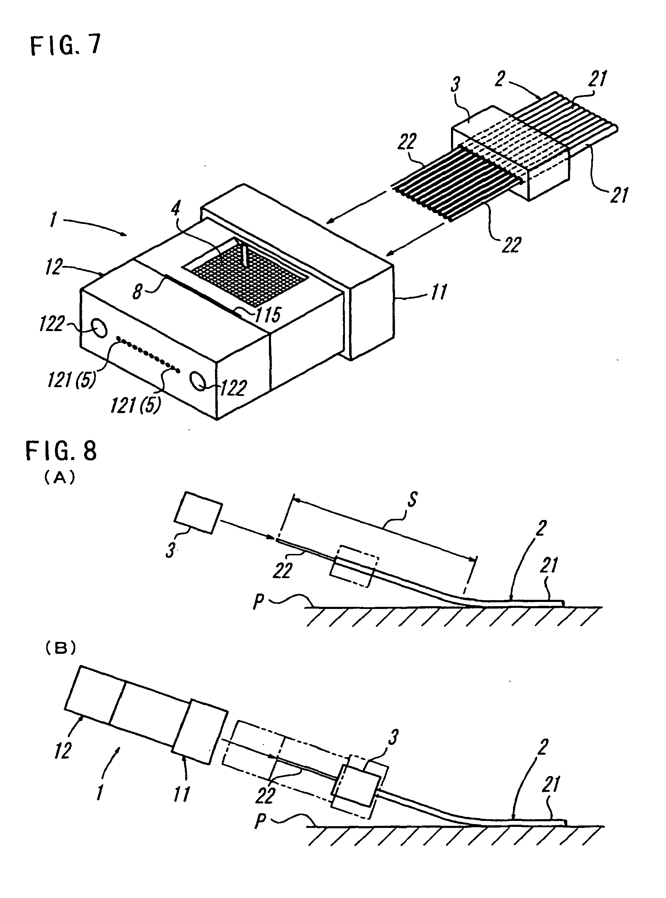

[FIG 7] Perspective view showing another example of assembling the optical connector in another manner different from .FIG 6.
[FIG 8] Side view illustrating an example of laying optical fibers shown in FIG 6 and FIG 7 on an optical fiber laying board, in which the optical fibers are laid in the order of (A) and (B).

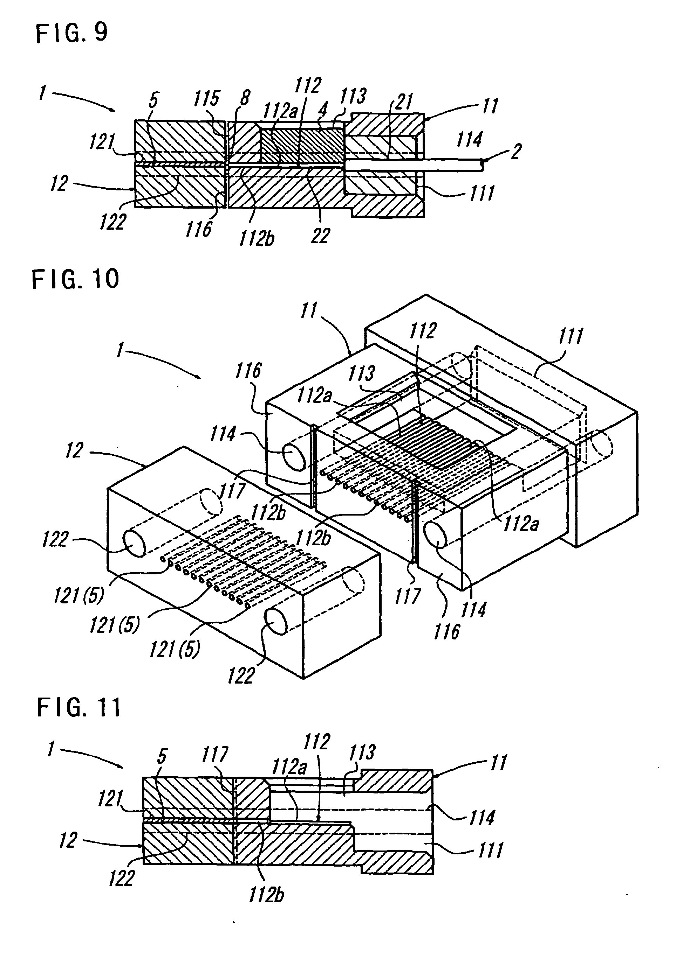

[FIG 9] Longitudinal sectional view showing the optical fibers set in the connector.
[FIG. 10] Perspective view showing a second preferable embodiment for practicing the manufacturing method for the optical connector of the invention.
[FIG 11] Longitudinal sectional view of FIG 10.

### [EXPLANATION OF REFERENCE MARKS]

- 1: Ferrule
- 2: Core wire
- 3: Boot
- 4: Plastic fixing
- 5: Intermediate optical fiber
- 6: Adhesive
- 7: Guide pin
- 8: index matching
- 11: Rear block
- 12: Front block
- 21: Outer coat
- 22: Optical fiber
- 111: Boot support
- 112: Insertion portion
- 112a: Rear insertion
- 112b: Front insertion
- 113: Window
- 114: Pin hole
- 115: Through groove
- 116: Adhesive surface
- 117: Slit
- 121: Holding portion
- 122: Pin hole

### [BEST MODE FOR CARRYING OUT THE INVENTION]

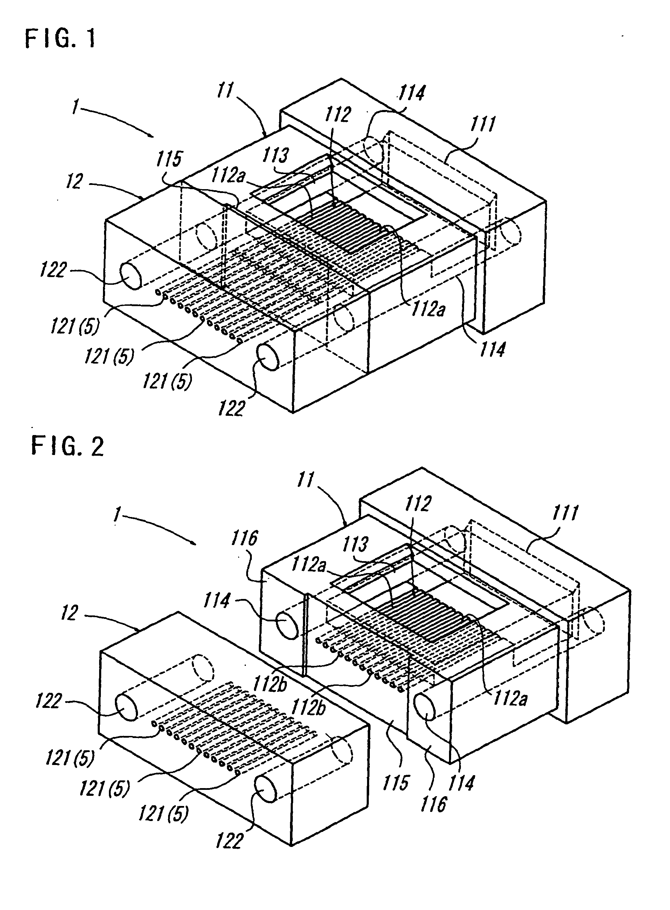

The best mode for carrying out the present invention relating to the optical connector and method for manufacturing the same will be described hereinafter with reference to the accompanying drawings. FIGS. 1 to 9 show the first embodiment of the best mode for implementing the optical connector and method for manufacturing the same according to the present invention.

The connector illustrated in the first embodiment of the invention is applicable to an MT-type multicore cable. The connector of the first embodiment comprises a ferrule 1 of a rectangular-block type divided into a rear block 11 and a front block 12, which are elastically coupled by means of a leaf spring or the like, as illustrated in FIG 1 to FIG 3.

The rear block 11 is placed on opposite side (rear side) of the joint surface of the ferrule 1 and has a boot support 111 opening wide in the rear end portion of its central part, a plurality of insertion portions 112 formed in a line and communicating with the boot support 111 on the front end portion of the central part, a window 113 communicating with the boot support 111 and insertion portions 112 opening in one side of the lateral side with respect to the short-side direction of the rectangular body, pin holes 114 forming in the lateral side portions and extending in the front-to-rear direction, a through groove 115 formed in the center part of the front end surface, and adhesion surfaces 116 on the side parts of the front end surface.

The boot support 111 is shaped in a substantially rectangle forming a rear half of the rear block 11 so as to receive a boot 3 of an oblong-cubic shape for allowing an optical fiber cable 2 to be resiliently retained in the rear block 11. The insertion portions 112 allow stripped leading ends of the optical fibers 22 free from an outer coat 21 on the optical fiber cable 2 to be resiliently retained in the boot support 111 through the medium of the boot 3. The insertion portions include rear insertion portions 112a of a semiopen tunnel-like shape such as a C-shaped groove or V-shaped groove and front insertion portions 112b of a closed-tunnel-like cylindrical shape.

The window 113 is a space for filling fixing resin 4 such as thermosetting resin or resin capable of hardening at normal temperature to secure the optical fibers 22 of the optical fiber cable 2 within the insertion portions 112. The window is formed in a rectangular shape conforming in configuration to the rear insertion portions 112a of the insertion portions 112. The pin holes 114 are not in communication with the boot support 111, insertion portions 112 and window 113.

The through groove 115 is formed by cutting shallowly the front end face of the rear block in the short-side direction into a rectangular shape. In the through groove, the front end openings of the front insertion portions 112b of the insertion portions 112 are formed. The adhesion surfaces 116 are formed on the front end face except the through groove 115. In the adhesion surfaces, the front end openings of the pin holes 114 are formed.

The front block 12 is attached to the joint side (front side face) of the ferrule 1 and has a plurality of holding portions 121 pierced therein and opening in the central part in a line in coaxial alignment with the insertion portions 112 of the rear block 11 and pin holes 122 formed in the front-to-rear direction in coaxial alignment with the pin holes 114 in the rear block 11.

The holding portions 121 allow the intermediate optical fibers 5 to be inserted thereinto and are formed in a closed tunnel-like cylindrical shape having the same diameter as those of the front insertion portions 112b of the insertion portions 112 in the rear block 11. The pin holes 122 have the same diameter as those of the pin holes 114 in the rear block 11 and are not in communication with the holding portions 121.

The holding portions 121 are preferably equal to or larger in number than the insertion portions 112. The holding portions 121 and insertion portions 112 should be formed at even intervals. This can accommodate a variety of situations such as, for example, a case of manufacturing the connector with the front block 12 and rear block 11 in sets (i.e. a case where the holding portions 121 and insertion portions 112 are equal in number) and a case of forming the front block 12 and rear block 11 in bulk (i.e. a case where the holding portions 121 and insertion portions 112 are different in number). That is, there is at least one advantage of giving making high versatility to the front block 12.

The ferrule 1 is assembled by forming the rear block 11 and the front block 12 separately and then uniting these blocks with adhesive.
That is, as illustrated in FIG 4(A), the intermediate optical fibers 5 are inserted into the holding portions 121 of the front block 12 (by using adhesive according to need), and then, the front end face and rear end face of the front block 12 are polished together with the front and rear end faces of the intermediate optical fibers 5.

Thereafter, as illustrated in FIG 4(B), upon applying the adhesive 6 (which is not limited to that consistent in refractive index with the optical fibers to be connected) to the adhesion surface 116 of the rear block 11, the rear block 11 and the front block 12 are fixedly joined to each other. Between the joined rear block 11 and front block 12, there is defined the through groove 115 as an interspace communicating the insertion portions with the outside of the ferrule 1.
The through groove 115 forms a step in the adhesion surface 116 to prevent light paths from being obstructed by the adhesive 6 getting out of the adhesion surface 116.

Since the front block 12 and the rear block 11 can be assembled upon being formed separately, the assembling of the blocks can be carried out with ease without complicating the polishing and processing of the both end faces of the intermediate optical fibers.

Further as illustrated in FIG 5, the rear block 11 and front block 11 can be assembled precisely from a mechanically structural perspective by positioning the pin holes 114 in the rear block 11 relative to the pin holes 122 in the front block 12 by use of guide pins 7. The guide pins 7 can also be applied for uniting the ferrule 1.

Around the pin holes 122 and pin holes 114, there may be formed concaves or convexes so as to prevent the adhesive 6 from flowing into the pin holes 122 and pin holes 114 by means of the concaves or convexes. Consequently, the guide pins 7 can readily be pulled out of pin holes after being utilized for guidance in assembling the front block 12 and rear block 11.
On this occasion, the concaves and convexes so formed are required to be fitted closely with each other, but the uniting strength of the blocks can be increased by forming the interspace between the concaves and convexes with an accuracy so as to allow the adhesive 6 to penetrate into the interspace by the capillary phenomenon.

As illustrated in FIG 6(B), the connection ends of the optical fibers 22 are stripped by peeling coatings 21 covering the optical fiber cores 2 passing through the boot 3 and inserted into the insertion portions 112 in the rear block 11 of the ferrule 1. Then, the boot 3 is fitted into the boot support 111 of the rear block 11.
At this time, the insertion portions 112 of the rear block 11 serves as guidance in inserting the optical fibers 22 along the rear insertion portions 112a, consequently to bring the multiple-core optical fibers 22 into line by means of the front insertion portions 112b.

Subsequently, as illustrated in FIG 6(C), the fixing resin 4 is filled through the window 113 in the rear block 11 of the ferrule 1. As the fixing resin 4, there may be used thermosetting epoxy resin, UV-curable epoxy resin, and quick setting acrylic adhesive. The fixing resin may preferably be low in viscosity, so that it can easily penetrate into between the optical fibers 22 and the intermediate optical fiber 5.

Successively, connection losses and/or reflectance losses of the optical fibers 22 and the intermediate optical fibers 5 are measured by putting a measuring connector onto the front block before the fixing resin becomes hardened. Since the connection losses and/or reflectance losses measured differ due to a change in refraction index of the fixing resin before and after the fixing resin becomes hardened, the measured losses can be used to determine whether a resultant connection of the optical fibers is adequate or not.

As a result, as illustrated in FIG 9, the optical fibers 22 of the optical fiber cable 2 are steadily held within the front and rear insertion portions 112 (112a and 112b) of the rear block 11 of the ferrule 1.
Furthermore, the optical fibers 22 of the optical fiber cable 2 held within the insertion portions 112 in the rear block 11 of the ferrule 1 have the unpolished end faces butted against the polished end faces of the intermediate optical fibers 5 incorporated within the holding portions 121 in the front block 12.

That is, when uniting the ferrule 1, the polished end faces of the intermediate optical fibers 5 incorporated within the holding portions 121 of the front block 12 are brought into their butted state.
Therefore, even if the end faces of the optical fibers 22 of the optical fiber cable 2, which are retained within the insertion portions 112 in the rear block 11 of the ferrule 1, are not polished, the light can be prevented from spreading, consequently to sufficiently reduce the connection loss of light intensity.

As illustrated in FIG 7 as another example of the first embodiment described above, the optical fibers 22 of the optical fiber cable 2 may be inserted into the insertion portions 112 after filling the fixing resin 4 into the window 113 and through groove 115 of the rear block 11 of the ferrule 1.

As illustrated in FIG 8, there is a concrete example of installing the optical fiber cable in the aforementioned first embodiment, wherein the boot 3 and ferrule 1 are attached to the optical fiber cable 2 laid on a base panel P and having its leading end part curved upward. Thus, this work of attaching the connector of the invention can readily be performed even if the length (extra length) S of the optical fiber cable 2 rising from the base panel P is short, because this embodiment does not need a polishing machine.

FIG 10 and FIG 11 show the second embodiment of the best mode for materializing the optical connector and manufacturing method therefor according to the invention. As shown in FIG 10, the second embodiment has no use for the through groove 115 in the rear block 11 of the ferrule 1 in the first embodiment as described above, but instead is provided with slits 117 between a part corresponding to the through groove 115 in the former embodiment and the adhesive surfaces 116.

In the second embodiment, the optical fibers 22 of the optical fiber cable 2 are inserted into the insertion portions 112 in the ferrule 1 formed by adhesively uniting the front block and rear block in the aforementioned manner after applying an index matching agent 8 to the rear ends of the intermediate optical fibers incorporated in the front block 12 of the ferrule 2.

As one example, the index matching agent may be of gelatinous material so as to favorably enhance the reliability of ensuring the light path even if the adhesive falls away due to concentration of heat strain imposed on the adhesion part.
Meanwhile, the slits 117 in the rear block 11 of the ferrule 1 serves as steps between the adhesive surfaces 116 to prevent light paths from being obstructed by the adhesive 6 getting out of the adhesion surfaces 116, similarly to the through groove 115 in the rear block 11 of the ferrule 1 in the first embodiment.

Without forming the through groove 115 and slits 117 in the rear block 11 of the ferrule 1 as seen in the former embodiments, adhesive 6 having refractive index matching property may be applied to the whole front end surface of the rear block 11 to fixedly join the rear block 11 and the front block 12.

Furthermore, the optical fibers 22 of the optical fiber cable 2 may be retained by any other means without forming the window 113 in the rear block 11 of the ferrule 1.

## Claims

1. An optical connector with a ferrule (1) for incorporating connection ends of optical fibers to be connected, wherein said ferrule comprises a rear block (11) having a plurality of insertion portions (112) for allowing connection ends of said optical fibers to be inserted therein, and a front block (12) having a plurality of holding portions (121) for incorporating intermediate optical fibers in coaxial alignment with said insertion portions (112), wherein a through groove (115) is formed in said rear block (11) by cutting shallowly a central part thereof including said insertion portions (112) in the front end face of said rear block in the short-side direction into a rectangular shape to form adhesion surfaces (116) on both outsides of said through groove (115) for being joined to said front block (12), and wherein said front and rear blocks are adhesively fixed to each other and secured by inserting guide pins (7) into pin holes (114, 122) formed coaxially for positioning after polishing an end face of said front block incorporating said intermediate optical fibers together with the end faces of said intermediate optical fibers. .

2. The optical connector claimed in claim 1, wherein concaves and convexes are formed in the peripheries of the pin holes (114, 122) of said end face of said front block (12) and said adhesion surfaces (116) of said rear block , which are mutually fitted with each other.

3. The optical connector claimed in claim 1 or claim 2, wherein the number of said holding portions (121) of said front block (12) is equal to or larger than that of said insertion portions (112).

4. A method for manufacturing an optical connector with a ferrule (1) for incorporating connection ends of optical fibers to be connected, wherein a rear block (11) having a plurality of insertion portions (112) for allowing connection ends of said optical fibers to be inserted therein and a front block (12) having a plurality of holding portions (121) for incorporating intermediate optical fibers in coaxial alignment with said insertion portions (112) are formed separately, wherein a through groove (115) is formed in said rear block (11) by cutting shallowly the central part including said insertion portions (112) in the front end face of said rear block in the short-side direction into a rectangular shape to form adhesion surfaces (116) on both outsides of said through groove (115) for being joined to said front block (12), and wherein said front and rear blocks are adhesively fixed to each other and secured by inserting guide pins (7) into pin holes (114,121) formed coaxial for positioning after polishing the end face of said front block (12) corporating said intermediate optical fibers together with the end faces of said intermediate optical fibers. .

5. The method for manufacturing the optical connector claimed in claim 4, wherein a refractive index matching gel having refractive index matching is applied to other surfaces of said optical fibers than said adhesion surfaces.

6. The method for manufacturing the optical connector claimed in claxm 4 or claim 5, wherein concaves and convexes are formed in the peripheries of said pin holes of (114, 121) said end face of said front block (12) and said adhesion surface (116) of said rear block (11), which are mutually fitted with each other.

## Patentansprüche

1. Optischer Steckverbinder mit einer Pressklemme (1) zum Inkorporieren von Anschlussenden von optischen Fasern, die anzuschließen sind, wobei die Pressklemme einen hinteren Block (11) mit einer Vielzahl von Einsteckabschnitten (112) umfasst, um zu gestatten, dass Anschlussenden der optischen Fasern dort hinein eingesteckt werden, und einen vorderen Block (12) mit einer Vielzahl von Halteabschnitten (121) zum Inkorporieren mittlerer optischer Fasern in koaxialer Ausrichtung mit den Einsteckabschnitten (112), wobei eine Durchgangsrinne (115) in dem hinteren Block (11) durch flaches Schneiden eines mittleren Teils davon einschließlich der Einsteckabschnitte (112) in der vorderen Endfläche des hinteren Blocks in der Richtung der kurzen Seite in eine rechtwinklige Form gebildet wird, um Anhaftungsoberflächen (116) an beiden Außenseiten der Durchgangsrinne (115) zum Zusammenfügen mit dem vorderen Block (12) zu bilden, und wobei der vordere und hintere Block anhaftend aneinander befestigt und durch Einstecken von Führungsstiften (7) in Stiftlöchern (114, 122) gesichert sind, die koaxial zum Positionieren nach dem Polieren einer Endoberfläche des vorderen Blocks, der die mittleren optischen Fasern zusammen mit den Endoberflächen der mittleren optischen Fasern inkorporiert, gebildet werden.

2. Optischer Steckverbinder nach Anspruch 1, wobei Konkavitäten und Konvexitäten in den Peripherien der Stiftlöcher (114, 122) der Endoberfläche des vorderen Blocks (12) und der Anhaftungsoberflächen (116) des hinteren Blocks, die gegenseitig miteinander angepasst sind, gebildet werden.

3. Optischer Steckverbinder nach Anspruch 1 oder Anspruch 2, wobei die Zahl der Halteabschnitte (121) des vorderen Blocks (12) gleich der oder größer als die der Einsteckabschnitte (112) ist.

4. Verfahren zum Herstellen eines optischen Steckverbinders mit einer Pressklemme (1) zum Inkorporieren von Anschlussenden von optischen Fasern, die anzuschließen sind, wobei ein hinterer Block (11) mit einer Vielzahl von Einsteckabschnitten (112), um zu gestatten, dass Anschlussenden der optischen Fasern dort hinein eingesteckt werden, und ein vorderer Block (12) mit einer Vielzahl von Halteabschnitten (121) zum Inkorporieren mittlerer optischer Fasern in koaxialer Ausrichtung mit den Einsteckabschnitten (112) separat gebildet werden, wobei eine Durchgangsrinne (115) in dem hinteren Block (11) durch flaches Schneiden des mittleren Teils einschließlich der Einsteckabschnitte (112) in der vorderen Endfläche des hinteren Blocks in der Richtung der kurzen Seite in eine rechtwinklige Form gebildet wird, um Anhaftungsoberflächen (116) an beiden Außenseiten der Durchgangsrinne (115) zum Zusammenfügen mit dem vorderen Block (12) zu bilden, und wobei der vordere und hintere Block anhaftend aneinander befestig t un d durch Einstecken von Führungsstiften (7) in Stiftlöchern (114, 121) [sic] gesichert sind, die koaxial zum Positionieren nach dem Polieren der Endoberfläche des vorderen Blocks (12), der die mittleren optischen Fasern zusammen mit den Endoberflächen de r mittleren optischen Fasern inkorporiert, gebildet werden.

5. Verfahren zu m Herstellen de s optischen Steckverbinders nach Anspruch 4 , wobei ein Brechungsindex-Anpassungsgel mit Brechungsindex-Anpassung auf die anderen Oberflächen der optischen Fasern als die Anhaftungsoberflächen aufgetragen wird.

6. Verfahren zu m Herstellen de s optischen Steckverbinders nach Anspruch 4 oder Anspruch 5, wobei Konkavitäten und Konvexitäten in den Peripherien der Stiftlöcher (114, 121) [sic] der Endoberfläche des vorderen Blocks (12) und der Anhaftungsoberflächen (116) des hinteren Blocks (11), die gegenseitig miteinander angepasst sind, gebildet werden.

## Revendications

1. Connecteur optique à ferrule (1) destiné à incorporer des extrémités de connexion de fibres optiques à connecter, ladite ferrule comprenant un bloc arrière (11) comportant une pluralité de parties d'insertion (112) pour permettre d'y insérer des extrémités de connexion desdites fibres optiques, et un bloc frontal (12) comportant une pluralité de parties de support (121) pour incorporer des fibres optiques intermédiaires en alignement coaxial avec lesdites parties d'insertion (112), une rainure traversante (115) étant formée dans ledit bloc arrière (11) en coupant peu profondément une partie centrale de celui-ci comportant lesdites parties d'insertion (112) dans la face d'extrémité frontale dudit bloc arrière dans le sens du côté court dans une forme rectangulaire afin de former des surfaces d'adhérence (116) sur les deux extérieurs de ladite rainure traversante (115) en vue de le joindre audit bloc frontal (12) et lesdits blocs frontal et arrière étant fixés par collage l'un à l'autre et assujettis en insérant des goupilles de guidage (7) dans des trous à goupilles (114, 122) formés coaxialement pour positionner après polissage une face d'extrémité dudit bloc frontal incorporant lesdites fibres optiques intermédiaires avec les faces d'extrémité desdites fibres optiques intermédiaires.

2. Connecteur optique selon la revendication 1, dans lequel des concavités et convexités sont formées dans les périphéries des trous à goupilles (114, 122) desdites faces d'extrémité dudit bloc frontal (12) et desdites surfaces d'adhérence (16) dudit bloc arrière qui s'engagent mutuellement les unes avec les autres.

3. Connecteur optique selon la revendication 1 ou la revendication 2, dans lequel le nombre desdites parties de support (121) dudit bloc frontal (12) est égal ou supérieur à celui desdites parties d'insertion (112).

4. Procédé de fabrication d'un connecteur optique à ferrule (1) destiné à incorporer des extrémités de connexion de fibres optiques à connecter, un bloc arrière (11) comportant une pluralité de parties d'insertion (112) pour permettre d'y insérer des extrémités de connexion desdites fibres optiques, et un bloc frontal (12) comportant une pluralité de parties de support (121) pour incorporer des fibres optiques intermédiaires en alignement coaxial avec lesdites parties d'insertion (112) étant formés séparément, une rainure traversante (115) étant formée dans ledit bloc arrière (11) en coupant peu profondément une partie centrale comportant lesdites parties d'insertion (112) dans la face d'extrémité frontale dudit bloc arrière dans le sens du côté court dans une forme rectangulaire afin de former des surfaces d'adhérence (116) sur les deux extérieurs de ladite rainure traversante (115) en vue de le joindre audit bloc frontal (12) ; et lesdits blocs frontal et arrière étant fixés par collage l'un à l'autre et assujettis en insérant des goupilles de guidage (7) dans des trous à goupilles (114, 121)[sic] formés coaxialement pour positionner après polissage une face d'extrémité dudit bloc frontal (12) incorporant lesdites fibres optiques intermédiaires avec les faces d'extrémité desdites fibres optiques intermédiaires.

5. Procédé de fabrication du connecteur optique selon la revendication 4, dans lequel un gel d'adaptation d'indice de réfraction ayant une propriété d'adaptation d'indice de réfraction est appliqué sur des surfaces desdites fibres optiques autres que les surfaces d'adhérence.

6. Procédé de fabrication du connecteur optique selon la revendication 4 ou la revendication 5, dans lequel des concavités et convexités sont formées dans les périphéries desdits trous à goupilles (114, 121) [sic] de ladite face d'extrémité dudit bloc frontal (12) et desdites surfaces d'adhérence (116) dudit bloc arrière (11) qui s'engagent mutuellement les unes avec les autres.
